## Europäisches Patentamt

## European Patent Office

## Office européen des brevets

(11) Veröffentlichungsnummer: **0 086 737**
**B1**

(12) **EUROPÄISCHE PATENTSCHRIFT**

(45) Veröffentlichungstag der Patentschrift:
**11.06.86**

(51) Int. Cl.⁴: **G 01 L 19/06, G 01 L 13/02**

(21) Anmeldenummer: **83730010.2**

(22) Anmeldetag: **01.02.83**

(54) Druck- oder Druckdifferenzmessgerät mit einer vor Überlastung geschützten Drucksensor-Einrichtung.

(30) Priorität: 15.02.82 DE 3205826
11.06.82 DE 3222620

(73) Patentinhaber: Siemens Aktiengesellschaft, Berlin und München Wittelsbacherplatz 2, D-8000 München 2 (DE)

(43) Veröffentlichungstag der Anmeldung:
24.08.83 Patentblatt 83/34

(72) Erfinder: Ziegler, Horst, Hasselfelder Weg 2,
D-1000 Berlin 45 (DE)

(45) Bekanntmachung des Hinweises auf die Patenterteilung:
11.06.86 Patentblatt 86/24

(84) Benannte Vertragsstaaten:
AT BE CH DE FR GB IT LI NL

(56) Entgegenhaltungen:
DE - A - 2 718 931

## Beschreibung

Die Erfindung bezieht sich auf ein Druck- oder Druckdifferenzmeßgerät mit einem zentralen Aufnahmekörper und einer vor Überlastung geschützten Drucksensor-Einrichtung in einer Meßkammer deren Teilkammern über jeweils einen Verbindungskanal mit Vorkammern verbunden sind, die von jeweils einer Trennmembran und dem Aufnahmekörper gebildet sind, und mit in jeweils einer Zusatzkammer angeordneten Zusatzmembranen die jeweils einer Trennmembran benachbart angeordnet sind und mit dieser in druckübertragender Verbindung stehen wobei die Zusatzmembranen mit einer derartigen Vorspannung beaufschlagt sind, daß sie erst nach Uberschreiten einer vorgegebenen Druckdifferenz an der Drucksensor-Einrichtung ausgelenkt werden, sowie mit Zusatzkanälen von den Verbindungskanälen zu den Zusatzmembranen.

Bei einem bekannten Gerät dieser Art (DE-A-27 18 931) ist jede Zusatzmembran in einer mit Füllflüssigkeit gefüllten Zusatzkammer untergebracht; die Zusatzkammern werden durch die Zusatzmembranen in jeweils zwei Teilkammern unterteilt, von denen jede an einen Zusatzkanal angeschlossen ist. Die Zusatzmembranen sind vorgespannt. Die Zusatzkanäle sind so angeordnet daß der an der einen Seite der einen Zusatzmembran mündende Zusatzkanal gemeinsam mit dem an der entsprechenden Seite der anderen Zusatzmembran mündende Zusatzkanal an einen Verbindungskanal angeschlossen ist. Entsprechend ist der andere Verbindungskanal über zwei weitere Zusatzkanäle mit den jeweils anderen Seiten der beiden Zusatzmembranen verbunden.

Bei einem anderen bekannten Druck- oder Druckdifferenzmeßgerät (DE-B -26 57 933) ist im zentralen Aufnahmekörper eine Ausgleichskammer vorgesehen, die durch eine Ausgleichsmembran unterteilt ist. Die eine Teilkammer der Ausgleichskammer ist mit der einen Vorkammer des bekannten Gerätes und die andere Teilkammer mit der anderen Vorkammer verbunden. Die Drucksensor-Einrichtung des bekannten Gerätes bzw. die sie aufnehmende Meßkammer ist über einen Verbindungskanal mit der einen Vorkammer bzw. der dieser zugewandten Teilkammer der Ausgleichskammer und über einen weiteren Verbindungskanal mit der anderen Vorkammer bzw. der anderen Teilkammer der Ausgleichskammer verbunden. Auf diese Weise ist ein Druck- bzw. Druckdifferenzmeßgerät geschaffen das aufgrund der Bemessung der Ausgleichsmembran einen Druckausgleichsweg bildet der parllel zu der Drucksensor-Einrichtung in der Meßkammer liegt wodurch eine Überlastung der Drucksensor-Einrichtung verhindert ist. Die Drucksensor-Einrichtung besteht bei dem bekannten Gerät aus einer eine Halbleitermeßmembran enthaltenden Wand. Da derartige Drucksensor-Einrichtungen gegenüber Uberlast sehr empfindlich sind, ist das bekannte Gerät in der oben beschriebenen Weise ausgebildet.

Ganz ähnlich sind weitere bekannte Differenzdruck-Meßumformer (DE-A-27 18 S73 und DE-A-30 47 276) ausgebildet, bei denen aus dem zentralen Aufnahmekörper zwei Kanäle in eine daneben angeordnete, besondere konstruktive Einheit mit der Drucksensor-Einrichtung geführt sind; auch hier besteht die Drucksensor-Einrichtung aus einem gegen Überlastung empfindlichen Halbleitermeßfühler, der durch eine zur eigentlichen Meßkammer parallel liegende Ausgleichskammer vor Überlastung geschützt ist.

Die bekannten Druck- oder Druckdifferenzmeßgeräte haben den Nachteil daß sie verhältnismäßig kompliziert aufgebaut sind. Sie benötigen nämlich zusätzlich zu der Meßkammer eine weitere. Ausgleichskammer mit einer Membran bzw. Zusatzkammern mit Zusatzmembranen was entweder die Unterbringung der Drucksensor-Einheit in einem neben dem zentralen Aufnahmekörper vorgesehenen zusätzlichen Aufbau oder ein Herausführen des Verbindungskanals aus dem zentralen Aufnahmekörper und anschließend wieder in diesen hinein erfordert.

Der Erfindung liegt daher die Aufgabe zugrunde ein Druck- oder Druckdifferenzmeßgerät mit einem zentralen Aufnahmekörper und einer vor Überlastung geschützten Drucksensor-Einrichtung in einer Meßkammer vorzuschlagen die sich durch einen vergleichsweise einfachen konstruktiven Aufbau auszeichnet und daher auch kostengünstig herstellbar ist. Darüber hinaus wird angestrebt die Meßeigenschaften im Vergleich zu den bekannten Geräten zu verbessern.

Zur Lösung dieser Aufgabe liegen bei einem Druck- oder Druckdifferenzmeßgerät der eingangs angegebenen Art erfindungsgemäß die Zusatzmembranen aufgrund ihrer Vorspannung an dem Aufnahmekörper an, und die Zusatzkammern sind über Hilfskanäle mit dem jeweils an die benachbarte Vorkammer angrenzenden Druckzuführungsraum verbunden; von dem Verbindungskanal mit der jeweils einen Trennmembran ist ein einziger Zusatzkanal fortgeführt der zu derjenigen Zusatzmembran führt, die der jeweils anderen Trennmembran benachbart ist.

Ein wesentlicher Vorteil dieser Ausführungsform des erfindungsgemäßen Meßgerätes besteht darin, daß es verhältmäßig einfach aufgebaut ist; denn das erfindungsgemäße Gerät kommt im Vergleich zu dem eingangs beschriebenen bekannten Gerät mit nur einem einzigen Zusatzkanal für jeden Verbindungskanal aus. Ein weiterer Vorteil ist darin zu sehen, daß die Zusatzmembranen bezüglich der benachbarten Trennmembran weitgehend unabhängig bemessen werden können und daß Trennmembran und Zusatzmembran jeweils für sich an dem Aufnahmekörper angebracht werden können.

Außerdem kann die Drucksensor-Einrichtung in vorteilhafter Weise mit der sie aufnehmenden Meßkammer im zentralen Aufnahmekörper untergebracht werden.

Die Anordnung der Zusatzmembranen in jeweils einer Zusatzkammer ermöglicht es die Zusatzmembranen durch jeweils mindestens eine Druckfeder in den Zusatzkammern gegen den Aufnahmekörper zu drücken. Damit läßt sich im Bedarfsfall die Zusatzmembran mit großer Kraft gegen den Aufnahmekörper pressen.

Eine weitere Lösung der oben angegebenen Aufgabe geht von einem Druck- oder Druckdifferenzmeßgerät aus mit einem zentralen Aufnahmekörper, mit einer vor Überlastung geschützten Drucksensor-Einrichtung in einer Meßkammer deren Teilkammern über jeweils einen Verbindungskanal mit Vorkammern verbunden sind, die von jeweils einer Trennmembran und dem Aufnahmekörper gebildet sind, und mit Zusatzmembranen, die jeweils einer Trennmembran benachbart angeordnet sind und mit dieser in druckübertragender Verbindung stehen, wobei die Zusatzmembranen mit einer derartigen Vorspannung beaufschlagt sind, daß sie erst nach Überschreiten einer vorgegebenen Druckdifferenz an der Drucksensor-Einrichtung ausgelenkt werden sowie mit Zusatzkanälen von den Verbindungskanälen zu den Zusatzmembranen und sieht erfindungsgemäß vor daß die Zusatzmembranen jeweils innerhalb der Vorkammern angeordnet sind und aufgrund ihrer Vorspannung an dem Aufnahmekörper anliegen und daß von dem Verbindungskanal mit der jeweils einen Trennmembran ein einziger Zusatzkanal fortgeführt ist der zu derjenigen Zusatzmembran führt, die der jeweils anderen Trennmembran benachbart ist.

Auch diese Ausführungsform des erfindungsgemäßen Meßgerätes hat den Vorteil eines.einfachen konstruktiven Aufbaues mit nur jeweils einem einzigen Zusatzkanal für jeden Verbindungskanal. Außerdem kommt diese Ausführungsform in besonders vorteilhafter Weise im Vergleich zu dem eingangs beschriebenen bekannten Gerät mit einer verhältnismäßig großen Ausgleichskammer mit Ausgleichsmembran ohne diese Kammer aus. Anstelle der Ausgleichskammer mit Ausgleichsmembran sind bei dem erfindungsgemäßen Meßgerät die Zusatzmembranen jeweils innerhalb der Vorkammern an dem Aufnahmekörper befestigt. Die Zusatzmembranen müssen in diesem Falle einen kleineren Durchmesser als die Trennmembranen aufweisen; der Verbindungskanal der entsprechenden Vorkammer ist außerhalb des Bereichs der Zusatzmembran in die Vorkammer geführt, während der der jeweils gegenüberliegenden Vorkammer zugeordnete Zusatzkanal an die Zusatzmembran herangeführt ist. Der besondere Vorteil dieser Ausführungsform besteht darin, daß sie einen besonders kompakten Aufbau ermöglicht und darüber hinaus eine einfache Herstellung erlaubt, weil für die Trenn- und die benachbarte Zusatzmembran nur jeweils ein einziges Membranbett am zentralen Aufnahme körper vorgesehen werden muß.

Die beschriebene Anbringung der Zusatzmembranen ermöglicht es in vorteilhafter Weise in beiden Ausführungsformen, die Drucksensor-Einrichtung mit der sie aufnehmenden Meßkammer im zentralen Aufnahmekörper unterzubringen, wobei die Führung der Verbindungskanäle bzw. Zusatzkanäle keinerlei Schwierigkeiten bereitet, weil eine Ausgleichskammer nicht zu umgehen ist.

Meßtechnisch bietet das erfindungsgemäße Meßgerät in seinen beiden Ausführungsformen eine Reihe von Vorteilen. Ein Vorteil besteht darin, daß durch die Federsteife der Ausgleichsmembran bedingte Temperatureinflüsse auf die Spanne nicht auftreten können; außerdem ist ein Temperatureinfluß auf die Spanne durch Anderung der Trennmembransteife durch Volumenänderung der Füllflüssigkeit nicht mehr gegeben. Ferner ist darauf hinzuweisen. daß beim erfindungsgemäßen Gerät ein Druckeinfluß auf den Nullpunkt nicht mehr durch ungleiche Gehäusekammerdehnungen in Verbindung mit der Trennmembransteife gegeben ist. was bei den bekannten Geräten der Fall ist. Der Druckeinfluß auf die Spanne ist bei dem erfindungsgemäßen Gerät auch nur noch durch den Sensor gegeben und daher nicht mehr abhängig von Anderungen der Trennmembransteife durch Füllvolumenänderung und durch Anderung der Federsteife der Ausgleichsmembran durch Gehäusedehnung. Auch der Kennlinienfehler ist nur noch von der Drucksensor-Einrichtung und der nachgeordneten Elektronik abhängig; nichtlineare Trennmembranen und nichtlineare Ausgleichsmembran haben keinen Einfluß auf die Kennlinie des Gerätes weil bei der vorzugsweisen Verwendung eines Halbleiter-Meßfühlers in der Drucksensor-Einrichtung das Aussteuer-Verdrängungsvolumen sehr klein ist. Schließlich ist noch darauf hinzuweisen, daß der Wechselüberlasteinfluß auf den Nullpunkt bei dem erfindungsgemäßen Gerät nur noch von der Hysterese der Trennmembranen, nicht aber von der Hysterese der Ausgleichsmembran abhängig ist. Ursächlich für die oben aufgeführten Vorteile ist, daß bei dem erfindungsgemäßen Meßgerät die Zusatzmembranen während normaler Druckverhältnisse überhaupt keinen Einfluß auf das Meßverhalten haben, weil sie in diesem Betriebszustand wirkungslos sind, und das Gerät insgesamt erheblich kleinere Füllflüssigkeitsräume hat.

Unabhängig von der konstruktiven Ausgestaltung des erfindungsgmäßen Druck- oder Druckdifferenzmeßgerätes weisen die Zusatzmembranen eine derartige Vorspannung auf daß sie sich erst nach Überschreiten einer vorgegebenen Druckdifferenz an der Drucksensor-Einrichtung von dem Aufnahmekörper abheben.

Bei dem vorgegebenen Differenzdruck handelt es sich um einen Druck, der oberhalb des Differenzdruck-Nennwertes liegt.

Die Vorspannung der Zusatzmembranen kann gemäß einer Weiterbildung der Erfindung in vorteilhafter Weise dadurch erreicht werden, daß zwischen dem Aufnahmekörper und den Zusatzmembranen jeweils ein Gußkörper liegt der von einer jeweils zwischen Aufnahmekörper und Zusatzmembran unter einem Überdruck eingebrachten und erstarrten Flüssigkeit gebildet ist. Dadurch, daß die Flüssigkeit unter einem Überdruck, also einem Druck über dem Nennwert, eingebracht und unter diesem Druck zum Erstarren gebracht wird, erhält die Zusatzmembran eine derartige Vorspannung, daß sie im Nenndruck-Bereich mit Sicherheit kainan atörenden Einfluß auf das Meßverhalten ausübt. Ist der Überdruck so gewählt, daß er dem Druck entspricht, bei dem sich die jeweilige Zusatzmembran abheban soll, dann ist erreicht, daß die Zusatzmembranen im eigentlichen Meßbereich keine Hubbewegungen ausführen und im Überdruck-Bereich das Verdrängungsvolumen unter der jeweils nicht benachbarten Trennmembran aufnehmen.

Ein weiterer Vorteil der Gußkörper besteht darin, daß die Zusatzmembranen infolge der mit ihrer Hilfe geformten Membranbetten ohne Hohlraum am Bett anliegen und die jeweile benachbarte Trennmembran ohne bleibende Verformungen mechanisch abstützen.

Die Flüssigkeit ist vorteilhafterweise eine Metallschmelze aua einem bei niedrigen Temperaturen schmelzenden Metall, wie z. B. Zinn. Es kommen aber auch andere erstarrende Stoffe ale Flüssigkeit in Frage.

Um ein Verkleben des Gußkörpers mit den Zusatzmembranen und ein Abfließen der Flüssigkeit über den Verbindungskanal zur gegenüberliegenden Trennmembran zu verhindern, ist vorteilhafterweise zwischen jedem Gußkörper und der zugeordneten Zusatzmembran eine dünne Abdichtmembran angeordnet, die innerhalb der Zusatzmembran an dem Aufnahmekörper angebracht ist.

Als besonders vorteilhaft wird es angesehen, wenn die Zusatzmembranen an ihrer jeweils der Abdichtmembran zugewandten Seite eine rauhe Oberfläche aufweisen. Die rauhe Oberfläche der Zusetzmembran erleichtert dae Abheben von der Abdichtmembran, wenn ein Überdruck auftritt.

Es ist zwar ein Verfahren zum Herstellen eines Membranbettes für eine druckbeanspruchte Membran bekannt (DE-A- 28 11 442), bei dem ein der Membran zugeordneter Körper an seiner der Membran zugeordneten Seite mit einer Ausnehmung versehen ist, die zur Membran hin mit einer dünnen Wand abgeschlossen und mit einem aushärtbaren Medium gefüllt ist; jedoch wird hierbei durch einen Druck auf die Membran in Richtung auf den Körper nur ein Membranbett mit sehr großer Präzision hergestellt, so das sich im Überlastfall die Membran, ohne Verformungen zu erleiden, an das Membranbett anlegen kann.

Zur Erläuterung der Erfindung ist in

Figur 1 ein Ausführungsbeipiel des erfindungsgemäßen Druckdifferenzmeßgerätes mit in Zusatzkammern gehaltenen Zusatzmembranen, in

Figur 2 ein weiteres Ausführungebeispiel mit innerhalb der Vorkammern untergebrachten Zusatzmembranen, in

Figur 3 ein zusätzliches Aueführungsbeispiel des Druckdifferenzmeßgerätes mit Gußkörpern und in

Figur 4 ein vergrößerter Ausschnitt aus Figur 3 wiedergegeben.

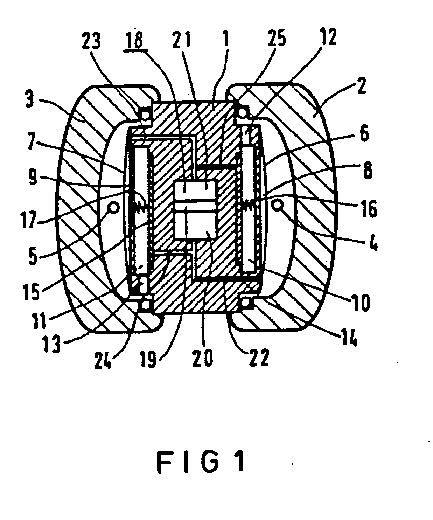

Das Ausführungsbeispiel nach Figur 1 weiet einen zentralen Aufnahmekörper 1 auf, der beiderseite durch Kappen 2 und 3 abgeschlossen iet. Die kappen 2 und 3 weisen Einströmöffnungen 4 und 5 auf, über die das Meßgerät mit der zu erfassenden Druckdifferenz beaufschlagt wird. Der zentrale Aufnahmekörper 1 iet an beiden Seiten mit jeweils einer Trennmembran 6 bzw.7 versehen, die als Membranbett ausgebildeten Stirnflächen dee Aufnahmekörpers 1 gegenüberliegen und jeweils eine Vorkammer 8 bzw. 9 begrenzen. Innerhalb des Aufnahmekörpers 1 sind Zusatzkammern 10 und 11 vorhanden die über Hilfskanäle 12 bzw. 13 mit dem Innenraum der kappen 2 und 3 verbunden sind, wodurch eine druckübertragende Verbindung zwischen den Zusatzkammern 10 und 11 und der Trennmembran 6 bzw. 7 gebildet ist. In den Zusatzkammern 10 und 11 ist jeweils eine Zusatzmembran 14 bzw. 15 vorgesehen, die durch jeweils eine Druckfeder 16 bzw. 17 gegen den Aufnahmekörper 1 gedrückt ist. Auf die Druckfedern 16 bzw. 17 kann verzichtet werden, wenn Zusatzmembranen mit ausreichender Vorspannung verwendet werden.

Innerhalb des Aufnahmekörpers 1 befindet sich ferner eine Meßkammer 18, die durch eine in der Figur nur schematisch angedeutete Drucksensor-Einrichtung 19 in eine Teilkammer 20 und eine weitere Teilkammer 21 unterteilt ist. Die Drucksensor-Einrichtung 19 ist vorzugsweise als eine Wand mit einer Halbleiter-Meßmembran ausgebildet. Die Teilkammer 20 der Meßkammer 18 ist über einen Verbindungskanal 22 mit der Vorkammer 8 verbunden, während die andere Teilkammer 21 über einen weiteren Verbindungskanal 23 mit der Vorkemmer 9 in Verbindung steht. Über einen Zusatzkanal 24 ist der eine Verbindungskanal 22 außerdem an die Zusatzmembran 15 auf ihrer von der Vorkemmer 9 ebgewandten Seite geführt; entsprechend ist der weitere Verbindungskenal 23 über einen weiteren Zusatzkanal 25 an die Zusatzmembran 14 angeschlossen.

Das in der Figur 1 dargestellte erfindungsgemäße Druckdifferenzmeßgerät erbeitet in folgender Weise: Ist das Gerät einem Differenzdruck unterhalb oder im Bereich des Differenzdruck-Nennwertes ausgesetzt, dann wird dieser Differenzdruck über die Verbindungskanäle 22 und 23 der Drucksensor-Einrichtung 19 mitgeteilt, die dann ein entsprechendes elektrisches Signal abzugreifen gestettet. Die Zusatzmembranen 14 und 15 sind infolge der auf ihnen lastenden Vorspannung wirkungslos. Übersteigt die Druckdifferenz infolge Überlastung den Druckdifferenz-Nennwert um einen vorgegebenen Wert, dann wird bei entsprechenden Druckverhältnissen beispielsweise die Trennmembran 7 die unter ihr in der Vorkammer 9 befindliche Druckvermittler-Flüssigkeit herausdrücken; die herausgedrückte Flüssigkeit gelangt über den Verbindungskanal 23 und den Zusatzkanal 25 zur Zusatzmembran 14 und veranlaßt diese, sich abzuheben. Die von der Trennmembran 7 herausgedrückte Flüssigkeit findet also unter der sich abhebenden Zusatzmembran 14 ihre Aufnahme. Eine über für die Drucksensor-Einrichtung zulässige Größe liegende Überlastung der Drucksensor-Einrichtung 19 ist dadurch vermieden.

Entsprechend wirkt das Meßgerät dann, wenn aufgrund der gegebenen Überdruckverhältnisse die Trennmembran 6 die in ihrer Vorkammer befindliche Flüssigkeit über den Verbindungskanal 22 hinausdrückt, weil diese Flüssigkeit dann über den Zusatzkanal 24 die Zusatzmembran 15 zum Abheben bringt.

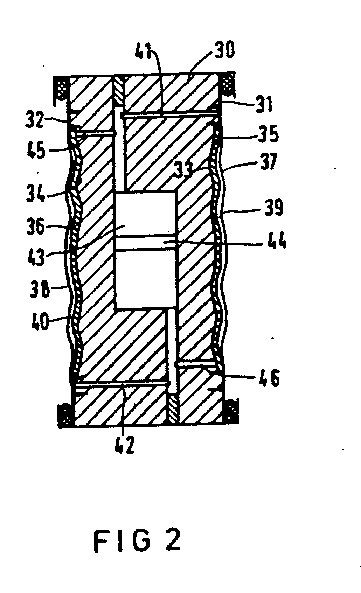

Bei dem Ausführungsbeispiel nach Figur 2, in der nur die im Zusammenhang mit der Erfindung weaentlichen Teile dargestellt sind, ist ein zentraler Aufnahmekörper 30 auf seinen beiden Stirnseiten 31 und 32 so ausgebildet, daß dort jeweils ein Membranbett 33 und 34 gebildet ist. Mit dem Aufnahmekörper 30 ist an den beiden Stirnseiten 31 und 32 jeweils eine Zusatzmembran 35 bzw. 36 verschweißt, wobei die Zusatzmembranen 35 und 36 jeweils eine derartige Vorspannung aufweisen, daß sie sich an das jeweilige Membranbett 33 bzw. 34 anpressen. Ebenfalls an den Stirnseiten 31 und 32 des Aufnahmekörpers 30 ist jeweils eine Trennmembran 37 und 38 angebracht, die zuaammen mit dem Aufnahmekörper 30 bzw. den auf diesen aufliegenden Zusatzmembranen 35 und 36 jeweils eine Vorkammer 39 bzw. 40 bilden. Die Zusatzmembran 35 und 36 sind im Durchmesser kleiner ausgeführt als die Trennmembranen 39 und 40.

Die gewählte Ausgestaltung und Anbringung der Trennmembranen und der Zusatzmembranen ermöglicht es, außerhalb des Bereichs der Zusatzmembranen 35 und 36 jeweils einen Verbindungskanal 41 bzw. 42 vorzusehen, über die die Vorkammern 39 bzw. 40 mit einer im Innern des Aufnahmekörpers 30 vorgesehenen Meßkammer 43 verbunden sind. Innerhalb der Meßkammer 43 ist wiederum eine Drucksensor-Einrichtung 44 angeordnet, die such in der Figur 2 nur schematisch dargestellt ist.

Von dem Verbindungskanal 41 führt ein Zusatzkanal 45 zur Zusatzmembran 36; entsprechend ist ein weiterer Zusatzkanal 46 zwischen dem Verbindungskanal 42 und der Zusatzmembran 35 vorgesehen.

Das Druckdifferenzmeßgerät nach Figur 2 arbeitet in ganz ähnlicher Weise wie das nach Figur 1; auch hier haben die Zusatzmembranen 35 und 36 bei im Differenzdruck-Nennwertbereich liegenden Differenzdrücken keinerlei Einfluß auf das Meßverhalten, weil sich bei diesen Betriebsverhältnissen die Zusatzmembranen 35 und 36 fest gegen den Aufnahmekörper 30 pressen. Übersteigt der Differenzdruck dagegen einen vorgegebenen, über der Differenzdruck-Nenngröße liegenden Wert dann wird je nach den gegebenen Druckverhältnissen entweder über den Zusatzkanal 45 von der Trennmembran 37 die Zusatzmembran 36 abgehoben oder über den Zusatzkanal 46 von der Trennmembran 38 die Zusatzmembran 35 zum Abheben gebracht. In jedem Falle wird von der Zusatzmembran die von den Trennmembranen bei Überlast aus den Vorkammern gepreßte Flüssigkeit aufgenommen und dadurch eine gefährliche Überlastung der Drucksensor-Einrichtung 44 vermieden.

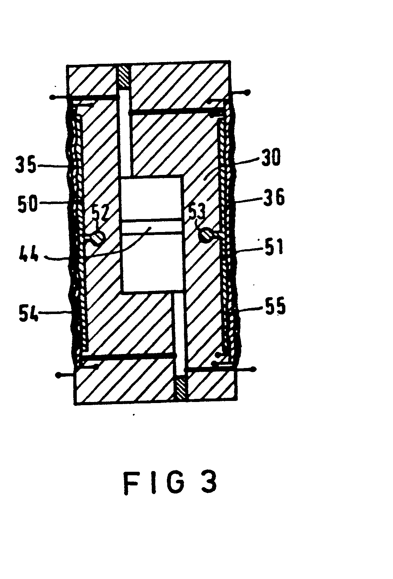

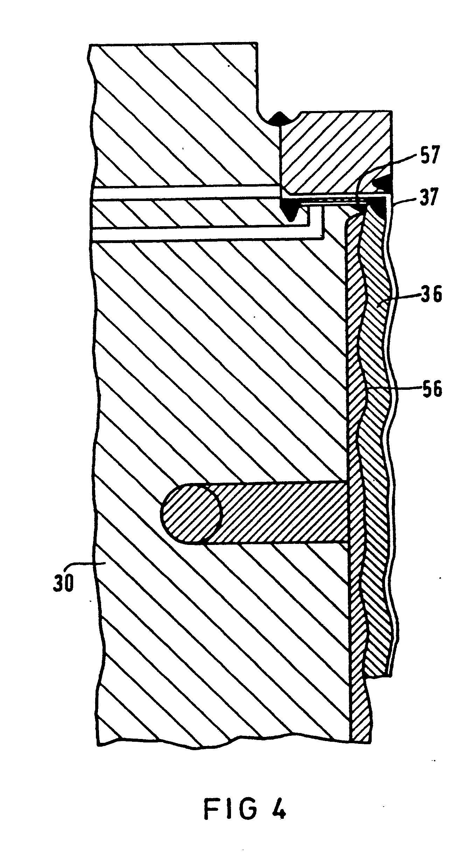

Das Ausführungsbeispiel nach den Figuren 3 und 4 unterscheidet sich von dem nach Figur 2 dadurch, daß beiderseit, des Aufnahmekörpers 30 Gußkörper 50 und 51 vorhanden sind, die von einer erstarrenden Flüssigkeit gebildet sind. Die Flüssigkeit ist über jeweils einen Einlaßkanal 52 bzw. 53 in Räume 54 und 55 zwischen Aufnahmekörper 30 und Zusatzmembranen 35 und 36 mit einem Druck gepreßt, der dem Druck entspricht, bei dem die Zusatzmembranen zur Entlastung der Drucksensor-Einrichtung 44 abheben sollen. Dieser Druck wird solange aufrechterhalten, bis die Flüssigkeit zu den Gußkörpern 50 und 51 erstarrt ist. Durch unterschiedlich große Druckbeaufschlagung der Flüssigkeiten auf der Hochdruck- und der Niederdruckseite können Löt- und klebeverbindungen gegen gefährliche Zugspannungen gesichert werden.

Wie insbesondere Figur 4 erkennen läßt, ist innerhalb jeder Zusatzmembran 35 bzw. 36 eine dünne Abdichtmembran 56 an dem Aufnahmekörper 30 angebracht, indem sie mit einer ringförmigen Schweißnaht 57 mit dem Aufnahmekörper 30 verbunden ist. Die Zusatzmembranen 35 und 36 weisen auf ihren jeweils der Abdichtmembran 56 zugewandten Seite eine rauhe Oberfläche auf.

In den Figuren 1 bis 4 sind der besseren Übersichtlichkeit halber Drosseleinrichtungen nicht dargestellt, die der Meßkammer auf beiden Seiten vorgeschaltet sind.

**Patentansprüche:**

1. Druck- oder Druckdifferenzmeßgerät mit einem zentralen Aufnahmekörper (1) mit einer vor Überlastung geschützten Drucksensor-Einrichtung (19) in einer Meßkammer (18), deren Teilkammern (20 21) über jeweils einen Verbindungskanal (22, 23) mit Vorkammern (8, 9) verbunden sind, die von jeweils einer Trennmembran (6, 7) und dem Aufnahmekörper (1) gebildet sind und mit in jeweils einer Zusatzkammer (10, 11) angeordneten Zusatzmembranen (14, 15), die jeweils einer Trennmembran (6, 7) benachbart angeordnet sind und mit dieser in druckübertragender Verbindung stehen, wobei die Zusatzmembranen (14, 15) mit einer derartigen Vorspannung beaufschlagt sind, daß sie erst nach Überschreiten einer vorgegebenen Druckdifferenz an der Drucksensor-Einrichtung (19) ausgelenkt werden, sowie mit Zusatzkanälen (24, 25) von den Verbindungskanälen (22, 23) zu den Zusatzmembranen (10, 11), dadurch gekennzeichnet, daß die Zusatzmembranen (14, 15) aufgrund ihrer Vorspannung an dem Aufnahmekörper (1) anliegen daß die Zusatzkammern (10, 11) über Hilfskanäle (12 13) mit dem jeweils an die benachbarte Vorkammer (8, 9) angrenzenden Druckzuführungsraum verbunden sind und daß von dem Verbindungskanal (22, 23) mit der jeweils einen Trennmembran (6, 7) ein einziger Zusatzkanal (24, 25) fortgeführt ist der zu derjenigen Zusatzmembran (15, 14) führt, die der jeweils anderen Trennmembran (7, 6) benachbart ist.

2. Meßgerät nach Anspruch 1, dadurch gekennzeichnet, daß die Zusatzmembranen (14,15) durch jeweils mindestens eine Druckfeder (16, 17) in den Zusatzkammern (10, 11) gegen den Aufnahmekörper (1) gedrückt sind.

3. Druck- oder Druckdifferenzmeßgerät mit einem zentralen Aufnahmekörper (30) mit einer vor Überlastung geschützten Drucksensor-Einrichtung (44) in einer Meßkammer (43), deren Teilkammern über jeweils einen Verbindungskanal (41, 42) mit Vorkammern (39 40) verbunden sind die von jeweils einer Trennmembran (37 38) und dem Aufnahmekörper (30) gebildet sind, und mit Zusatzmembranen (35, 36), die jeweils einer Trennmembran (37, 38) benachbart angeordnet sind und mit dieser in druckübertragender Verbindung stehen, wobei die Zusatzmembranen (35, 36) mit einer derartigen Vorspannung beaufschlagt sind, daß sie erst nach Überschreiten einer vorgegebenen Druckdifferenz an der Drucksensor-Einrichtung (30) ausgelenkt werden, sowie mit Zusatzkanälen (45, 46) von den Verbindungskanälen (41, 42) zu den Zusatzmembranen (35, 36), dadurch gekennzeichnet, daß die Zusatzmembranen (35 36) jeweils innerhalb der Vorkammern (39, 40) angeordnet sind und aufgrund ihrer Vorspannung an dem Aufnahmekörper (30) anliegen und daß von dem Verbindungskanal (41, 42) mit der jeweils einen Trennmembran (37, 38) ein einziger Zusatzkanal (45, 46) fortgeführt ist, der zu derjenigen Zusatzmembran (36, 35) führt, die der jeweils anderen Trennmembran (38, 37) benachbart ist.

4. Meßgerät nach einem der vorangehenden Ansprüche dadurch gekennzeichnet daß sich die Drucksensor-Einrichtung (19) mit der Meßkammer in dem zentralen Aufnahmekörper (1) befindet.

5. Meßgerät nach einem der Ansprüche 1, 3 oder 4, dadurch gekennzeichnet, daß zwischen dem Aufnahmekörper (30) und den Zusatzmembranen (35, 36) jeweils ein Oußkörper (50 51) liegt, der von einer jeweils zwischen Aufnahmekörper (30) und Zusatzmembran (35 bzw. 36) unter einem Überdruck eingebrachten und erstarrten Flüssigkeit gebildet ist.

6. Meßgerät nach Anspruch 5, dadurch gekennzeichnet, daß der Überdruck etwa dem Druck entspricht, bei dem sich die jeweilige Zusatzmembran abhebt.

7. Meßgerät nach Anspruch 5 oder 6, dadurch gekennzeichnet, daß die Flüssigkeit eine Metallschmelze aus einem bei niedrigen Temperaturen schmelzenden Metall ist.

8. Meßgerät nach einem der Ansprüche 5 bis 7, dadurch gekennzeichnet, daß zwischen jedem Gußkörper (50, 51) und der zugeordneten Zusatzmembran (35, 36) eine dünne Abdichtmembran (56) angeordnet ist die innerhalb der Zusatzmembran (35 bzw. 36) an dem Aufnahmekörper (30) angebracht ist.

9. Meßgerät nach Anspruch 8, dadurch gekennzeichnet daß die Zusatzmembranen (35, 36) an ihrer jeweils der Abdichtmembran (56) zugewandten Seite eine rauhe Oberfläche aufweisen.

## Claims

1. A device for measuring pressure or pressure difference having a central receiving body (1), a pressure sensor device (19), protected from overload, in a measuring chamber (18) whose sub-chambers (20, 21) are each connected by way of a connecting channel (22, 23) to antechambers (8, 9), each of which is formed by a separating diaphragm (6, 7) and by the receiving body (1), additional diaphragms (14, 15), each of which is arranged in an additional chamber (10, 11) and each of which is adjacent to one separating diaphragm (6, 7) and is connected thereto so as to transfer pressure, where the additional diaphragms (14, 15) are subject to a prestressing such that they are deflected only when a predetermined pressure difference has been exceeded on the pressure sensor device (19), and additional channels (24, 25) from the connecting channels (22, 23) to the additional diaphragms (10, 11), characterised in that as a result of their prestressing, the additional diaphragms (14, 15) contact the receiving body (1); that the additional chambers (10, 11) are connected by way of auxiliary channels (12, 13) to that pressure supply chamber which in each case adjoins the adjacent antechamber (8, 9); and that a single additional channel (24, 25) continues from the connecting channel (22, 23) with the first separating diaphragm (6, 7), and leads to that additional diaphragm (15, 14) which is adjacent to the other separating diaphragm (7, 6) in each case.

2. A measuring device as claimed in Claim 1, characterised in that the additional diaphragms (14, 15) are each pressed against the receiving body (1) by at least one pressure spring (16, 17) in the additional chambers (10, 11).

3. A device for measuring pressure or pressure difference, having a central receiving body (30), a pressure sensor device (44), protected from overload, in a measuring chamber (43) whose subchambers are each connected by way of a connecting channel (41, 42) to antechambers (39, 40), each of which is formed by a separating diaphragm (37, 38) and the receiving body (30), additional diaphragms (35, 36), each of which is adjacent to a separating diaphragm (37, 38) and is connected thereto so as to transfer pressure, where the additional diaphragms (35, 36) are subject to a prestressing such that they are deflected only when a predetermined pressure difference is exceeded on the pressure sensor device (30), and additional channels (45, 46) from the connecting channels (41, 42) to the additional diaphragms (35, 36), characterised in that the additional diaphragms (35, 36) are in each case arranged within the antechambers (39, 40) and as a result of their prestressing contact the receiving body (30); and that a single additional channel (45, 46) continues from the connecting channel (41, 42) with the first separating diaphragm (37, 38), and leads to the additional diaphragm (36, 35) which is adjacent to the other separating diaphragm (38, 37) in each case.

4. A measuring device as claimed in one of the preceding Claims, characterised in that the pressure sensor device (19), together with the measuring chamber, is located in the central receiving body (1).

5. A measuring device as claimed in one of Claims 1, 3 or 4, characterised in that, between the receiving body (30) and the additional diaphragms (35, 36), there is in each case located a cast body (50, 51) which is formed by a liquid which has been introduced at an excess pressure between the receiving body (30) and the additional diaphragm (35, 36) and has solidified.

6. A measuring device as claimed in Claim 5, characterised in that the excess pressure corresponds approximately to the pressure at which the additional diaphragm lifts off.

7. A measuring device as claimed in Claim 5 or Claim 6, characterised in that the liquid is a melt of a metal which melts at low temperatures.

8. A measuring device as claimed in one of Claims 5 to 7, characterised in that, between each caat body (50, 51) and the assigned additional diaphragm (35, 36), there is arranged a thin sealing diaphragm (56) which is applied to the receiving body (30) within the additional diaphragm (35, 36).

9. A measuring device as claimed in Claim 8, characterised in that at their sides facing towards the sealing diaphragm (56) the additional diaphragms (35, 36) have in each case a rough surface.

**Revendications**

1. Appareil de mesure de pressions ou de différences de pression comportant un corps central formant logement (1) et un dispositif formant capteur de pression (19) protégé contre toute surcharge et situé dans une chambre de mesure (18) subdivisée en deux chambres partielles (20, 21) qui sont reliées par l'intermédiaire de canaux respectifs de liaison (22, 23) à des chambres amont (8, 9) qui sont formées par des membranes respectives (6, 7) et par le corps formant logement (1), et comportant des membranes supplémentaires (14, 15), qui sont disposées dans des chambres supplémentaires respectives (10, 11) en étant au voisinage de membranes de séparation respectives (6, 7) et qui sont reliées à ces dernières selon une liaison de transmission de pression, les membranes supplémentaires (14, 15) étant chargées par une précontrainte telle qu'elles ne sont fléchies que lors du dépassement d'une différence de pression prédéterminée au niveau du dispositif formant capteur de pression (19), ainsi que des canaux supplémentaires (24, 25) reliant les canaux de liaison (22, 23) aux membranes supplémentaires (10, 11), caractérisé par le fait que les membranes supplémentaires (14, 15) sont appliquées, en raison de leur précontrainte, contre le corps formant logement (1), que les chambres supplémentaires (10, 11) sont reliées par l'intermédiaire de canaux auxiliaires (12, 13) à des espaces respectifs d'amenée de pression, qui jouxtent les chambres amont voisines (8, 9), et qu'à partir du canal (22, 23) aboutissant à une paroi respective de séparation (6, 7) s'étend un seul canal supplémentaire (24, 25) qui aboutit à la membrane supplémentaire (15, 14) qui est voisine de l'autre membrane respective de séparation (7, 6).

2. Appareil de mesure selon la revendication 1, caractérisé en ce que les membranes supplémentaires (14, 15) sont repoussées respectivement par au moins un ressort de pression (16, 17) dans les chambres supplémentaires (10, 11), contre le corps formant logement (1).

3. Appareil de mesure de pressions ou de différences de pression comportant un corps central formant logement (30), comportant un dispositif formant capteur de pression (44), protégé contre toute surcharge et situé dans une chambre de mesure (43) subdivisée en deux chambres partielles qui sont reliées par l'intermédiaire de canaux respectifs de liaison (41, 42) à des chambres amonts (39, 40) qui sont formées par des membranes respectives de séparation (37, 39) et par le corps formant logement (30), et comportant des membranes supplémentaires (35, 36) qui sont disposées au voisinage de membranes respectives de séparation (37, 38) et sont reliées à ces dernières selon une liaison de transmission de pression, les membranes supplémentaires (35, 36) étant chargées par une précontrainte telle qu'elles ne sont fléchies que lors du dépassement d'une

**0 086 737**

différence de pression prédéterminée au niveau du dispositif formant capteur de pression (30), ainsi que des canaux supplémentaires (45, 46) partant des canaux de liaison (41, 42) pour aboutir aux membranes supplémentaires (35, 36), caractérisé par le fait que les membranes supplémentaires (35, 36) sont disposées respectivement à l'intérieur des chambres amont (39, 40) et sont appliquées, en raison de leur précontrainte, contre le corps formant logement (30) et qu'à partir du canal de liaison (41, 42) aboutissant à une membrane respective de séparation (37, 38) s'étend un seul canal supplémentaire (45, 46) qui aboutit à la membrane supplémentaire (36, 35) qui est voisine de l'autre membrane respective de séparation (38, 37).

4. Appareil de mesure suivant l'une des revendications précédentes, caractérisé par le fait que le dispositif formant capteur de pression (19) est situé, ainsi que la chambre de mesure, dans le corps central formant logement (1).

5. Appareil de mesure suivant l'une des revendications 1, 3 ou 4, caractérisé par le fait qu'entre le corps formant logement (30) et les membranes supplémentaires (35, 36) se trouve disposé respectivement un corps moulé (50, 51) qui est formé par un liquide qui est inséré et se solidifie sous l'action d'une surpression respectivement entre le corps formant logement (30) et la membrane supplémentaire (35 ou 36).

6. Appareil de mesure suivant la revendication 5, caractérisé par le fait que la surpression correspond approximativement à la pression provoquant un écartement de la membrane supplémentaire respective.

7. Appareil de mesure suivant la revendication 5 ou 6, caractérisé par le fait que le liquide est formé par une masse métallique fondue constituée en un métal fondant à basse température.

8. Appareil de mesure suivant l'une des revendications 5 à 7, caractérisé par le fait qu'entre chaque corps moulé (50, 51) et la membrane supplémentaire (35, 36) asosociée se trouve disposée une membrane mince d'étanchéification (56) qui est montée à l'intérieur de la membrane supplémentaire (35 ou 36), contre le corps formant logement (30).

9. Appareil de mesure suivant la revendication 8, caractérisé par le fait que les membranes supplémentaires (35, 36) comportent une surface rugueuse au niveau de leurs faces tournées respectivement vers la membrane d'étanchéification (56).

FIG 1

FIG 2

FIG 3

FIG 4